# DEMANDE DE BREVET EUROPEEN

(11) **EP 2 098 426 A1**
(43) Date de publication de la demande: **09.09.2009**
(21) Numéro de dépôt: 09154149.0
(22) Date de dépôt: 02.03.2009
(51) Int. Cl.: B60T 8/48

(54) **Système de régulation du freinage pour le contrôle de stabilité et de trajectoire d'un véhicule automobile**

(30) Priorité: 03.03.2008 FR 0851360
(71) Demandeur: PEUGEOT CITROËN AUTOMOBILES S.A., 78140 Vélizy Villacoublay (FR)
(72) Inventeur: Zink, Eric, 92700 COLOMBES (FR); Blanc, Fabrice, 38080, L'ISLE D'ABEAU (FR)

(57) **Abrégé**

L'invention concerne un système de régulation du freinage pour un véhicule automobile, comprenant :
- au moins un circuit d'admission et d'échappement de liquide de frein relié à un élément de frein situé au niveau des roues (9a,9b) ;
- un premier système de gestion du freinage, commandé par un conducteur du véhicule via un dispositif de commande installé dans l'habitacle du véhicule, et relié à un maître-cylindre (3) muni d'un réservoir de liquide de frein (15),
- un deuxième système de gestion du freinage, commandé par une unité de contrôle électronique installée dans le véhicule.
Selon l'invention, le deuxième système de gestion du freinage comporte :
- une pompe hydraulique (7), comportant une entrée de liquide de frein (701) reliée directement au réservoir de liquide de frein (15) permettant de prélever du liquide de frein lors de son activation et une sortie de liquide de frein (702) reliée au circuit d'admission et d'échappement,
- une électrovanne d'isolement normalement ouverte (5) agencée dans le circuit d'admission et d'échappement de sorte que le circuit de défreinage est distinct du circuit de freinage, ladite électrovanne étant commandée par l'unité de contrôle électronique, et
- un moyen de récupération du liquide de frein à la sortie du circuit d'échappement.
L'invention concerne également un véhicule comportant un tel système de regulation de freinage.

## Description

La présente invention concerne un système de régulation du freinage pour véhicule automobile comportant un circuit de défreinage distinct du circuit de freinage. De manière plus précise, l'invention concerne un système de freinage permettant de contrôler la stabilité et la trajectoire du véhicule.

Un système de freinage classique, commandé par un conducteur du véhicule, comporte généralement les éléments suivants :
- un amplificateur d'effort de freinage destiné à amplifier l'effort exercé sur la pédale de frein par le conducteur,
- un maître-cylindre tandem, qui consiste en une pompe à piston utilisée pour transformer l'effort pédale en pression hydraulique ; à cet effet, le maître-cylindre tandem est en communication avec un réservoir de liquide de frein, et
- des étriers situés au niveau des roues, et destinés, dans le cas du freinage à disque, à transformer la pression hydraulique en effort pour presser les plaquettes de frein contre les disques, entraînant un ralentissement de la rotation du disque et donc de la roue par frottements.

En outre, un tel système de freinage comporte un circuit de freinage constitué d'un ensemble de canalisations hydrauliques destinées à relier les différents éléments du système de freinage et à permettre la circulation du liquide de frein sous pression.

Ces systèmes de freinage, bien qu'efficaces au niveau de l'arrêt des roues en lui-même, ne permettent pas de résoudre les problèmes de perte de contrôle, de stabilité et de trajectoire pouvant survenir lorsqu'un véhicule roule dans certaines conditions particulières, par exemple sur une chaussée endommagée ou glissante, ou à une vitesse trop élevée, ou lorsque le conducteur est amené à freiner ou changer de direction brusquement.

Différents systèmes de freinage ont donc été conçus par les constructeurs automobiles pour remédier à ces inconvénients.

Un premier type de système vise à éviter le blocage des roues lorsqu'un conducteur freine trop brusquement, afin de maintenir une bonne adhérence des roues sur la chaussée en toutes circonstances, ce qui permet de conserver la directivité du véhicule et d'optimiser les distances de freinage. Le principe de fonctionnement d'un tel système connu plus généralement sous le nom ABS (Anti lock Bracking System) est d'utiliser des électrovannes et des pompes hydrauliques pour diminuer la pression de freinage appliquée sur une roue, dés lors qu'un risque de blocage de cette roue est détecté. Le système comprend en outre un capteur de vitesse de rotation installé sur chaque roue, une unité de commande électronique et deux électrovannes par roue pour permettre ce contrôle de pression.

On connaît également des systèmes électroniques de contrôle de stabilité et de trajectoire du véhicule, plus généralement connus sous l'acronyme ESC pour "Electronic Stability Control ", dont l'objectif est d'appliquer de façon indépendante à chaque roue du véhicule un couple correcteur de freinage afin de contrôler la stabilité et la trajectoire du véhicule dans le cas d'une consigne de freinage du conducteur, inexistante, insuffisante ou au contraire trop importante, au regard du comportement dynamique du véhicule.

Afin de pouvoir procéder à cette augmentation ou génération de couple de freinage sans action du conducteur sur la pédale, il est nécessaire de disposer d'un dispositif de fourniture d'énergie, installé dans le système de freinage, et indépendant de tout effort du conducteur sur la pédale de frein. La mise en oeuvre d'un tel dispositif de fourniture d'énergie est commandée, le cas échéant, par l'unité de contrôle électronique. Ce dispositif sera appelé deuxième système de gestion de freinage dans la suite de ce document.

Ce système de freinage est muni d'une pompe hydraulique, permettant, en cas d'action insuffisante ou inexistante d'un conducteur sur la pédale, de faire circuler du liquide de frein sous pression vers un ou plusieurs étriers de frein, de manière à freiner une ou plusieurs roues du véhicule.

Généralement, un système de freinage muni d'un contrôle de stabilité et de trajectoire de type ESC, permet également la mise en oeuvre d'un système anti-blocage de roues, par exemple de type ABS, car les éléments utilisés pour générer ou augmenter la pression de freinage sur chaque roue peuvent être utilisés, à l'inverse, pour diminuer cette pression, et ainsi permettre le déblocage d'une roue.

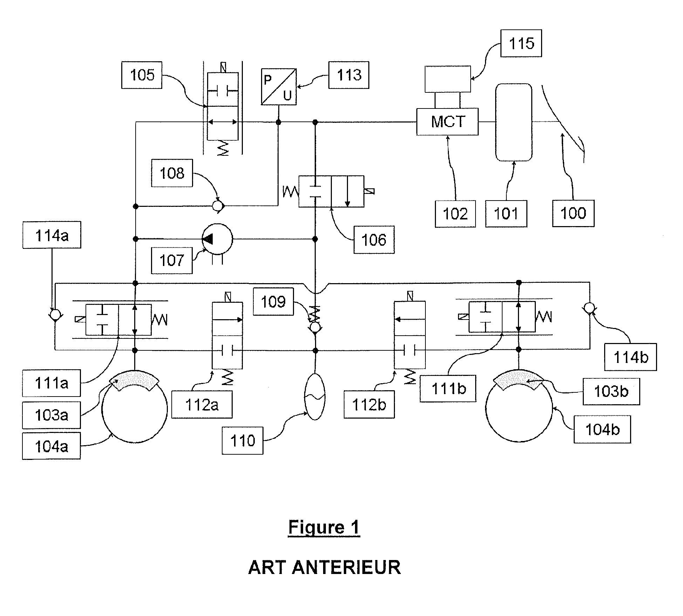

On a représenté sur la figure 1 les éléments essentiels pour le fonctionnement d'un système de freinage conforme à l'état de la technique du point de vue d'un seul des deux circuits de freinage, dans un véhicule automobile comportant une installation de freinage hydraulique à deux circuits de freinage, c'est-à-dire uniquement pour deux roues dont les freins sont reliés entre eux. En effet, les éléments essentiels pour le fonctionnement du système de freinage pour le deuxième circuit sont les mêmes.

Le système de freinage montré sur la figure 1 comprend les éléments suivants, formant un premier système de gestion du freinage ;
- une pédale de frein 100, destinée à transmettre et amplifier l'effort exercé par le conducteur du véhicule lorsqu'il souhaite freiner,
- un amplificateur d'effort de freinage 101,
- un maître-cylindre tandem 102, relié à un réservoir 115 de liquide de frein, permettant de transformer l'effort amplifié par l'amplificateur 101 et la pédale en pression hydraulique, les deux circuits de freinage sont reliés à la sortie des deux chambres de pression du maître-cylindre tandem 102, et
- des étriers 103a et 103b associés à des disques de frein 104a et 104b pour transformer la pression hydraulique en couple de freinage de chacune des roues.

Il comprend en outre un ensemble d'éléments formant un deuxième système de gestion de freinage. Ces éléments, dont le fonctionnement sera décrit par la suite, sont les suivants :
- une électrovanne d'isolement normalement ouverte 105,
- une électrovanne d'aspiration normalement fermée 106,
- une pompe hydraulique 107,
- des clapets 108, 109, permettant de n'autoriser le passage du fluide que dans un sens d'écoulement,
- un accumulateur basse pression 110, destiné à stocker du liquide pendant certaines phases de fonctionnement du système,
- au niveau de chaque étrier de frein, un circuit d'admission et/ou d'échappement, comportant deux électrovannes, l'une étant une électrovanne d'admission normalement ouverte (111a, 111b), et l'autre une électrovanne d'échappement normalement fermée (112a, 112b), ainsi qu'un clapet anti-retour (114a,114b),
- un capteur de pression 113, et
- un ensemble de canalisations hydrauliques, non référencées, permettant de transporter le liquide entre les différents éléments du système.

Ce système de freinage comporte également une unité de contrôle électronique qui n'est pas représentée sur la figure 1 et qui permet de piloter les systèmes de freinage et notamment de mettre en oeuvre les procédés d'ABS et d'ESC en procédant de la manière suivante :
- collecter et traiter les mesures issues des différents capteurs de position, de vitesse, accélération ou pression installées dans le véhicule,
- communiquer avec le système de contrôle de moteur,
- contrôler et commander, à partir de ces mesures, les différents éléments du deuxième système de freinage, par exemple, de manière à mettre en oeuvre un procédé anti-blocage de roues ou un procédé de contrôle de trajectoire et de stabilité du véhicule,

On précise ici que, dans l'ensemble de la description qui suit, les électrovannes mises en oeuvre pourront être des électrovannes tout ou rien, ou des électrovannes proportionnelles. Une électrovanne tout ou rien est caractérisée par deux états, un état de repos (qui peut être ouvert ou fermé), et un état d'activation (qui est l'état contraire).

Une électrovanne proportionnelle comporte une infinité d'états entre un état de repos et un état d'activation complète, ce qui permet de procéder à une ouverture et une fermeture progressives.

On entend par le terme "électrovanne normalement ouvert (ou fermé)", l'électrovanne dans son état de repos ouvert (ou fermé).

Il peut également s'agir d'électrovanne « débit », c'est-à-dire permettant de contrôler un débit, ou d'électrovanne « pression », c'est-à-dire permettant de contrôler la différence de pressions appliquée à cette électrovanne.

Lors d'un freinage classique, dans lequel il n'est pas fait appel au deuxième système de gestion du freinage, toutes les électrovannes sont désactivées, c'est-à-dire qu'elles se trouvent dans leur position normale, et le fonctionnement est alors le suivant :
- lorsque le conducteur appuie sur la pédale 100, ainsi que précédemment décrit, du liquide de frein sous pression est émis en sortie du maître-cylindre tandem 102,
- ce liquide traverse, d'une part, l'électrovanne d'isolement normalement ouverte 105, et d'autre part le clapet 108 monté en parallèle de l'électrovanne d'isolement normalement ouverte,
- le liquide est alors dirigé, via le réseau de canalisations hydrauliques, en direction des étriers 103a et 103b, via les électrovannes 111 a et 111 b,
- le liquide sous pression est ainsi introduit dans les étriers 103a et 103b, ce qui a pour conséquence le freinage de chacune des roues.

Lors d'un défreinage classique, c'est à dire lorsque le conducteur réduit ou cesse d'exercer un effort sur la pédale de frein 100, le liquide sous pression contenu dans les étriers 103a et 103b est redirigé vers le maître-cylindre tandem 102, via les électrovannes 111 a et 111 b et les clapets 114a et 114b ainsi que l'électrovanne 105.

Lorsqu'un risque de blocage d'une roue est détecté, par exemple de la roue équipée de l'étrier 103a, il convient de diminuer la pression dans cet étrier, afin de procéder au déblocage de cette roue. Un tel risque de blocage fait suite à une action de freinage trop importante par rapport aux conditions d'adhérence.

Pour effectuer cette diminution de pression, l'unité de contrôle électronique commande les électrovannes d'admission 111a, normalement ouverte, et d'échappement 112a, normalement fermée, afin qu'elles deviennent respectivement fermée et ouverte.

En conséquence, le liquide sous pression contenu dans l'étrier 103a, s'écoule, via l'électrovanne112a, jusqu'à l'accumulateur basse pression 110.

Cet accumulateur basse pression permet de stocker de façon temporaire le fluide évacué par les électrovannes d'échappement 112a et 112b des étriers 103a et 103b. Le clapet 109 installé entre l'accumulateur 110 et l'aspiration de la pompe 107, et autorisant l'écoulement du liquide de frein dans le sens accumulateur vers la pompe permet d'utiliser la pompe 107 pour vider l'accumulateur 110 et donc réduire la pression de l'accumulateur 110 en cas de besoin.

Dans le cas, au contraire, où le conducteur exerce un effort inexistant ou insuffisant sur la pédale de frein par rapport à la situation du véhicule, l'unité de contrôle électronique détecte que la pression maître-cylindre, mesurée par le capteur 113, est inférieure à la pression requise pour maintenir une bonne stabilité de ce véhicule. Dans ce cas, elle commande l'activation de l'électrovanne de pilotage 105, qui devient alors fermée, ce qui a pour effet d'isoler le maître-cylindre 102 du circuit de freinage. L'électrovanne d'aspiration 106, placée entre le maître-cylindre 102 et l'aspiration de la pompe hydraulique 107, est également activée et se retrouve alors dans l'état ouvert. La pompe 107 est ainsi reliée au maître-cylindre 102 et pourra prélever du fluide directement au niveau du maître-cylindre 102 ou de son réservoir 115.

L'unité de contrôle commande alors une activation de la pompe hydraulique 107, afin d'envoyer du liquide de frein sous pression en direction des électrovannes d'admission 111 a et 111 b, qui sont commandées en fonction de la (ou des) roue(s) sur laquelle (lesquelles) il est nécessaire d'appliquer une pression de freinage.

Ainsi comme on vient de le voir dans l'exemple sur la figure 1, le circuit de freinage comporte une électrovanne d'isolement normalement ouverte 105 reliée d'une part au maître cylindre 102 et d'autre part à l'entrée du circuit d'admission. Cette électrovanne a pour fonction d'isoler le circuit de freinage du maître cylindre lors de la phase d'activation du deuxième système de gestion du freinage. Plus précisément, elle est interposée entre le maître cylindre 102 et les deux circuits constitués par les électrovannes d'admission 111 a et 111 b et les clapets 114a, 114b, de sorte que lors du freinage ou du défreinage, le liquide de frein circule dans un même circuit hydraulique. De ce fait, cette configuration de circuit de freinage n'est pas optimale en terme de circulation du liquide de frein. En effet, l'expression des pertes de charge singulières causées par exemple par la géométrie des usinages lors de la fabrication du bloc hydraulique contenant la pompe, les électrovannes, les clapets et les accumulateurs peut dépendre du sens d'écoulement du fluide. Il est donc nécessaire de trouver un compromis pour les éléments lorsque le fluide traverse dans les deux sens. Ainsi, il est possible d'optimiser d'avantage la géométrie des éléments en adoptant une architecture dans laquelle le fluide circule toujours dans le même sens.

Dans ce but, la présente invention vise à fournir une nouvelle architecture du système de freinage dans lequel le circuit de défreinage est distinct du circuit de freinage, c'est-à-dire les éléments constituant le circuit de freinage sont distincts des éléments constituant le circuit de défreinage.

Par ailleurs, les éléments formant le deuxième système de gestion du freinage font appel à de nombreux composants hydrauliques dont l'intégration dans un bloc hydraulique peut s'avérer compliquée et coûteuse. Ces inconvénients empêchent l'installation de ce type de système de manière généralisée sur les véhicules produits par les constructeurs automobile à l'heure actuelle.

La présente invention vise donc également à fournir un système de freinage permettant la mise en oeuvre d'un procédé de contrôle de stabilité et de trajectoire, qui soit moins coûteux et plus simple à installer tout en préservant l'efficacité du système pour remédier aux pertes de stabilité et de trajectoire pouvant survenir dans un véhicule.

Le concept de l'invention est de simplifier le bloc hydraulique du deuxième système de gestion du freinage, en partant de l'idée de supprimer ou remplacer certains composants hydrauliques par des éléments moins coûteux tout en remplissant la même fonction. Parmi les différents éléments compris dans les systèmes existants, les électrovannes qui sont au nombre total de 12 (6 par circuit) représentent une partie coûteuse du bloc hydraulique.

En conséquence, l'invention part de l'idée que la suppression d'une partie des électrovannes, en particulier les électrovannes d'aspiration permettrait de diminuer les coûts de ces systèmes, et ainsi de les installer en série sur de nombreux véhicules.

En outre, la pompe hydraulique est identifiée comme l'un des composants les plus coûteux, son utilisation lors des phases ABS impose une augmentation de la durée potentielle d'utilisation de la pompe. L'autre idée principale de l'invention est donc de fournir un système de freinage qui ne nécessite pas l'activation de la pompe lors de la phase ABS ou plus généralement de diminution de pression, permettant de réduire les exigences sur la pompe.

Le rôle de l'électrovanne d'aspiration qui est une électrovanne normalement fermé, placée entre le maître-cylindre et l'aspiration de la pompe hydraulique est de permettre lorsqu'elle est activée, par exemple dans un mode de gestion du freinage mettant en oeuvre un procédé ESC, à la pompe de prélever du fluide au niveau du maître-cylindre ou de son réservoir.

L'invention vise donc à fournir un système de freinage muni d'un système de contrôle de stabilité et de trajectoire, dans lequel le prélèvement du fluide est assuré directement par une liaison hydraulique moins couteuse qu'une électrovanne.

A cet effet, l'invention concerne un système de régulation du freinage pour un véhicule automobile, comprenant :
- au moins un circuit de freinage relié à un élément de frein situé au niveau des roues;
- un premier système de gestion du freinage, commandé par un conducteur du véhicule via un dispositif de commande installé dans l'habitacle du véhicule, et relié à un maître-cylindre muni d'un réservoir de liquide de frein, et
- un deuxième système de gestion du freinage, commandé par une unité de contrôle électronique installée dans le véhicule.

Selon l'invention, le deuxième système de gestion du freinage comporte :
- une pompe hydraulique, comportant une entrée de liquide de frein reliée directement au réservoir de liquide de frein permettant de prélever du liquide de frein lors de son activation et une sortie de liquide de frein reliée au circuit d'admission et d'échappement,
- une électrovanne d'isolement normalement ouverte agencée dans le circuit d'admission et d'échappement de sorte que le circuit de défreinage est distinct du circuit de freinage, ladite électrovanne étant commandée par l'unité de contrôle électronique, et
- un moyen de récupération du liquide de frein à la sortie du circuit d'échappement.

On précise tout d'abord que, dans la suite de la description, on désignera par "circuit de freinage" l'ensemble des canalisations hydrauliques permettant la circulation du liquide de frein des premier et deuxième systèmes de gestion de freinage vers le ou les circuits d'admission et d'échappement reliés aux différents éléments de freins.

Le dispositif de commande permettant au conducteur de commander le premier système de gestion du freinage est, par exemple, une pédale de frein, ou tout autre actionneur électrique ou mécanique installé dans le véhicule et permettant de transmettre une information de commande au système de freinage.

Comme on vient de définir l'invention ci-dessus, en vue de la simplification et de la réduction du coût de l'installation du système de freinage, on a supprimé l'électrovanne d'aspiration qui relie dans les systèmes de freinage existant le maître-cylindre à l'aspiration de la pompe. Elle est remplacée par une liaison hydraulique qui permet à la pompe de prélever du fluide au niveau du réservoir de liquide de frein lors de l'activation du deuxième système de gestion du freinage mettant en oeuvre, par exemple, un procédé ESC.

En vue d'optimiser le circuit de freinage, la présente invention propose donc de former un circuit de défreinage distinct du circuit de freinage. Pour cela, elle propose d'interposer l'électrovanne d'isolement normalement ouverte entre le maître cylindre et les clapets anti-retour du circuit d'admission de sorte que le liquide de frein traverse les électrovannes d'admission uniquement lors de la mise sous pression des étriers, c'est-à-dire lors de la phase de freinage.

Dans une forme de réalisation avantageuse de l'invention, le moyen de récupération du liquide de frein est constitué par une liaison reliant directement la sortie du circuit d'échappement de liquide de frein au réservoir du maître cylindre.

Cette forme de réalisation permet de réduire l'encombrement du système de freinage existant qui comporte généralement un accumulateur basse pression.

En particulier, cette forme du système selon l'invention se distingue de l'état de la technique en ce qu'il ne met pas en oeuvre la pompe hydraulique lors des phases de réduction de la pression dans un ou plusieurs éléments de frein (par exemple, lors de la phase de déblocage des roues).

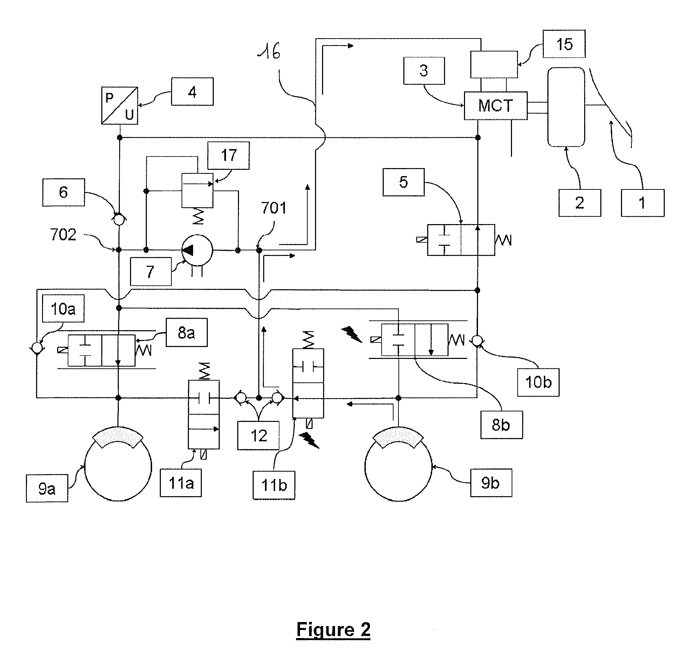

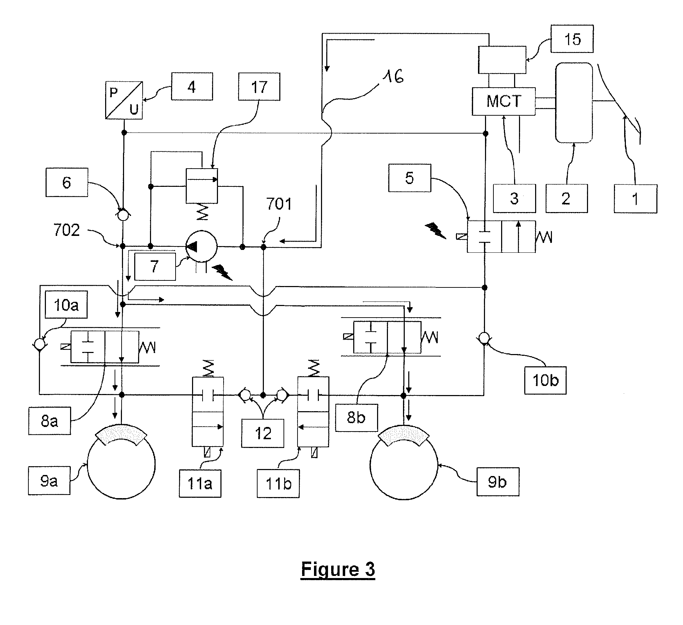

D'autres caractéristiques et avantages de l'invention seront apparents à la lecture de la description de certains de ses modes de réalisations particuliers, non limitatifs de l'invention en référence aux dessins qui les représentent:
en figure 1: un système de régulation du freinage de l'art antérieur;
en figure 2: un système de régulation du freinage selon une forme particulière de réalisation de l'invention en fonctionnement lors d'une phase de diminution de pression dans un élément de frein (mode ABS par exemple) ;
en figure 3 : un système de régulation du freinage selon une forme particulière de réalisation de l'invention en fonctionnement lors d'une phase de génération ou d'augmentation de pression dans les éléments de frein (mode ESC par exemple).

La figure 2 montre un système de régulation du freinage selon une forme particulière de réalisation de l'invention.

Ce système comporte l'ensemble des éléments décrits ci-dessus, à savoir :
- deux circuits d'admission et d'échappement, reliés chacun à un élément de frein 9a, 9b installé sur une roue du véhicule, chaque circuit étant formé d'une électrovanne d'admission 8a, 8b, normalement ouverte, une électrovanne d'échappement 11a, 11b, normalement fermée, et des clapets anti-retour 10a, 10b,
- un premier système de gestion du freinage comportant un amplificateur d'effort de freinage 2 et un maître cylindre tandem 3 muni d'un réservoir de liquide de frein 15, commandé par un conducteur via une pédale 1,
- un deuxième système de gestion du freinage comportant une pompe 7, un clapet 6 et une ligne hydraulique 16 reliant la sortie des circuits d'échappement au réservoir 15, et
- une électrovanne d'isolement normalement ouverte 5 reliée d'une part au maître cylindre 3 et d'autre part aux clapets 10a, 10b, son activation permettant d'isoler le circuit du maître cylindre 3 afin d'activer le deuxième système de freinage.

Dans ce système, les phases de freinage et de défreinage sont mises en oeuvre de manière similaire aux systèmes existants dans l'état de la technique sauf que lors de la phase de défreinage le fluide retourne au maitre-cylindre 3 uniquement par le circuit spécifique de défreinage..

Lorsque le conducteur appuie sur la pédale 1, l'amplificateur d'effort de freinage 2 augmente cet effort qui est transmis au maître cylindre 3. La pression générée par le maître cylindre 3 est transmise par le clapet 6 et les électrovannes d'admission normalement ouvertes 8a, 8b aux étriers 9a, 9b installés respectivement sur les roues du véhicule. Ces éléments constituent le circuit de freinage.

Lorsque le conducteur réduit ou cesse d'exercer un effort sur la pédale 1 pour réaliser un défreinage, le liquide de frein contenu sous pression dans les étriers 9a, 9b retourne au maître cylindre 3 à travers les clapets 10a, 10b et l'électrovanne normalement ouverte 5 qui est interposée entre le maître cylindre 3 et les clapets 10a et 10b. Ces éléments constituent le circuit de défreinage. Ainsi l'agencement particulier de l'électrovanne d'isolement 5 dans le circuit de freinage permet d'optimiser le circuit de freinage et en particulier les pertes de charge.

Le système montré sur la figure 2 permet, en outre, la mise en oeuvre de fonctionnalités anti-blocage, permettant de relâcher la pression sur un ou plusieurs étriers de frein lorsqu'un risque de blocage de roue est détecté par l'unité de contrôle électronique.

Ainsi, lorsqu'il est nécessaire de faire chuter par exemple la pression dans l'étrier 9b, l'électrovanne normalement ouverte d'admission 8b et l'électrovanne d'échappement normalement fermée 11 b sont activées qui deviennent respectivement fermée et ouverte (l'activation peut ne pas être simultanée ni totale). Le fluide s'écoule à travers le clapet 12 pour retourner au réservoir du maître cylindre 3 grâce à la ligne hydraulique 16. Les flèches sur la figure 2 représentent l'écoulement du fluide au cours de cette phase de fonctionnement.

Dans le cas où le conducteur relâche la pédale de frein 1 et que l'électrovanne d'admission 8b est activée, c'est-à-dire fermée, la pression dans l'étrier 9b peut diminuer car le fluide contenu dans l'étrier 9b a la possibilité de retourner au maître cylindre 3 par l'intermédiaire du clapet 10b et de l'électrovanne d'isolement normalement ouverte 5.

Dans une variante de cette forme de réalisation de l'invention, les clapets 12 sont intégrés aux électrovannes 11a, 11b ou totalement supprimés.

De manière générale, la ligne de retour 16 peut être propre à chacun des circuits d'admission et d'échappement, correspondant chacun à deux roues du véhicule. Il peut être envisagé une variante dans laquelle cette ligne de retour est partagée par les 2 circuits. Il n'y a ainsi qu'une seule ligne de retour pour l'ensemble des 4 roues du véhicule.

Le système de la figure 2 permet également de générer ou d'augmenter la pression de freinage appliquée sur un ou plusieurs étriers de freins, en l'absence d'action d'un conducteur sur la pédale 1 ou lorsque l'action exercée par le conducteur est insuffisante, mettant ainsi en oeuvre une fonctionnalité de contrôle de stabilité et de trajectoire, de type ESC. En effet, lors d'un freinage classique, la pression permettant de freiner les roues est issue d'une force mécanique exercée par le conducteur. En l'absence de cette force, il est nécessaire de disposer d'une autre source d'énergie pour envoyer une pression en direction des étriers 9a, 9b.

Un tel mode de fonctionnement est illustré par un exemple décrit sur la figure 3.

Lorsque la pression à la sortie du maître cylindre mesurée par le capteur de pression 4 est inférieure à la pression requise, l'électrovanne normalement ouverte 5 est activée et devient alors fermée. Le maître cylindre est ainsi isolé du circuit de freinage et le circuit de défreinage est fermé. La pompe 7 dont l'aspiration 701 est reliée directement au réservoir 15 par la liaison 16 prélève du fluide directement au niveau du réservoir 15. Elle est ensuite activée pour générer une pression requise. Cette pression peut être modulée par les électrovannes d'admission normalement ouvertes 8a, 8b ou bien encore par une commande spécifique de la pompe. Les flèches sur la figure 3 représentent l'écoulement du fluide au cours de cette phase de fonctionnement.

Si le conducteur appuie finalement sur la pédale de frein 1, la pression résultante de cette action peut être transmise aux étriers des roues 9a, 9b si elle est supérieure à la pression générée par la pompe 7 par l'intermédiaire du clapet 6.

Dans cette forme de réalisation de l'invention illustrée sur la figure 3, afin de protéger la pompe 7 et le circuit du freinage des surpressions lorsque la pompe 7 est activée en même temps que les électrovannes d'admissions 8a, 8b du circuit d'admission et d'échappement, le système peut également comporter un limiteur de pression 17 monté en parallèle par rapport à la pompe.

Ce limiteur de pression peut être remplacé par un programme permettant de commander la pompe de manière à éviter les surpressions dans le circuit de freinage, ou combiné avec ce programme de commande pour contrôler la surpression.

## Revendications

1. Système de régulation du freinage pour un véhicule automobile, comprenant :
- au moins un circuit d'admission et d'échappement de liquide de frein relié à un élément de frein situé au niveau des roues (9a, 9b) ;
- un premier système de gestion du freinage, commandé par un conducteur du véhicule via un dispositif de commande installé dans l'habitacle du véhicule, et relié à un maître-cylindre (3) muni d'un réservoir de liquide de frein (15),
- un deuxième système de gestion du freinage, commandé par une unité de contrôle électronique installée dans le véhicule, **caractérisé en ce que** le deuxième système de gestion du freinage comporte :
- une pompe hydraulique (7), comportant une entrée de liquide de frein (701) reliée directement au réservoir de liquide de frein (15) permettant de prélever du liquide de frein lors de son activation et une sortie de liquide de frein (702) reliée au circuit d'admission et d'échappement,
- une électrovanne d'isolement normalement ouverte (5) agencée dans le circuit d'admission et d'échappement de sorte que le circuit de défreinage est distinct du circuit de freinage, ladite électrovanne étant commandée par l'unité de contrôle électronique, et
- un moyen de récupération du liquide de frein à la sortie du circuit d'échappement.

2. Système de régulation du freinage selon la revendication 1, **caractérisé en ce que** ledit moyen de récupération de liquide de frein est constitué par une liaison (16) entre la sortie du circuit d'échappement et le réservoir de liquide de frein (15), permettant un retour de liquide de frein vers le réservoir lors de l'activation du deuxième système de gestion du freinage.

3. Système de régulation du freinage selon la revendication 1 ou 2, **caractérisé en ce que** chaque circuit d'admission et d'échappement relié à un élément de frein (9a, 9b) comporte une électrovanne d'admission normalement ouverte (8a, 8b), un clapet anti-retour (10a, 10b) monté en parallèle de ladite électrovanne d'admission normalement ouverte, une électrovanne d'échappement normalement fermée (11a, 11b) et un clapet anti-retour (12) reliant ladite électrovanne d'échappement normalement fermée au réservoir de liquide de frein (15).

4. Système de régulation du freinage selon la revendication 3, **caractérisé en ce que** ledit clapet anti-retour (12) est intégré à l'électrovanne d'échappement normalement fermée (11a, 11b).

5. Système de régulation du freinage selon l'une des revendications 1 à 4, **caractérisé en ce que** l'électrovanne d'isolement normalement ouverte (5) est interposée entre le maître cylindre (3) et les clapets (10a, 10b) du circuit d'admission de manière à former un circuit de défreinage distinct du circuit de freinage.

6. Système de régulation du freinage selon l'une des revendications 1 à 5, **caractérisé en ce qu'**il comporte un limiteur de pression (17) monté en parallèle par rapport à la pompe permettant de protéger la pompe hydraulique (7) et le circuit de freinage des surpressions.

7. Système de régulation du freinage selon l'une des revendications 1 à 6, **caractérisé en ce qu'**il comporte un programme permettant de commander la pompe de manière à éviter les surpressions dans le circuit de freinage.

8. Véhicule comportant un système de régulation du freinage selon l'une des revendications 1 à 6.
